(19)

Europäisches
Patentamt
European
Patent Office
Office européen
des brevets

(11) **EP 2 930 467 A1**

(12) **EUROPEAN PATENT APPLICATION**

(43) Date of publication:
**14.10.2015 Bulletin 2015/42**

(51) Int Cl.:
**G01C 21/16** (2006.01)  **G08G 1/00** (2006.01)
**G01C 9/00** (2006.01)

(21) Application number: **14001332.7**

(22) Date of filing: **11.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Airbus Defence and Space GmbH**
**85521 Ottobrunn (DE)**

(72) Inventors:
• **Ruppel, Michael**
  **89278 Nersingen (DE)**
• **Vallant, Georg**
  **89073 Ulm (DE)**

(74) Representative: **Meel, Thomas**
**Airbus Defence and Space GmbH**
**Patentabteilung**
**88039 Friedrichshafen (DE)**

(54) **A system and method for sensing the inclination of a moving platform with respect to gravity**

(57)    The invention concerns a system and method for sensing the inclination of a moving platform (007) with respect to gravity. An inertial measurement unit (001), mounted on the moving platform (007), located close to the platform's centre of gravity, sensing linear (011) and rotational motions (012) of the moving platform (007), an inclinometer (004), mounted on said moving platform (007) at a location spaced from the inertial measurement unit (001) by a distance r sensing the motion-caused gravitational acceleration g' using a 3D accelerometer, an acceleration estimation unit (014) for determining the motion-caused acceleration a' at said point where said inclinometer (004) is mounted by computing said measured linear motions (011) and said measured rotational motions (012) of the inertial measurement unit (001) with a platform model (013) for an motion-caused acceleration depending distance r' between said inertial measurement unit (001) and said inclinometer (007) an acceleration correction unit (015) determining a motion-compensated gravitational acceleration g by removing the motion-caused acceleration a' from the motion-caused gravitational acceleration g', an attitude computation unit (016) for computing the residual error (019) and determining the sum of said residual error (019) and said the motion-compensated gravitational acceleration g and transforming said sum to attitude values using trigonometric relations

Fig.4

**EP 2 930 467 A1**

**Description**

This invention concerns a method to deploy a 3D high precision inclinometer in remote sensing devices (RSD) on moving platforms with an Inertial Measurement Unit (IMU) in order to achieve horizon-stabilized conditions for the remote sensing application.

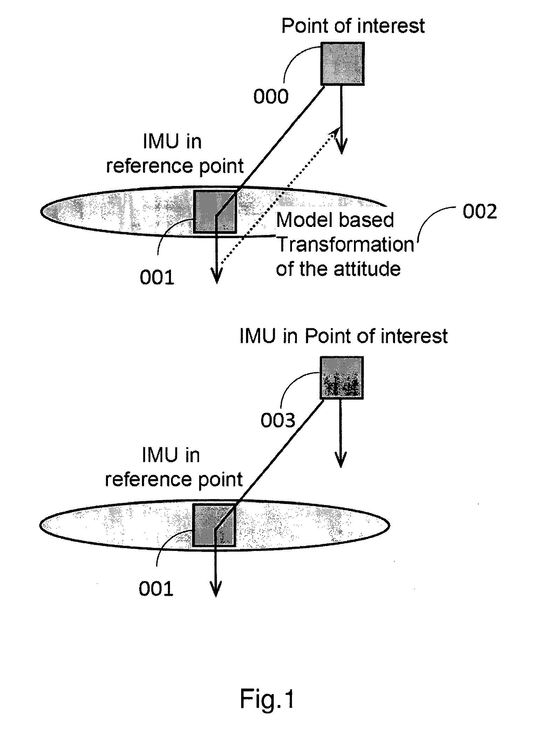

Many non-stationary platforms, e.g. US 7,650,252 B2, include an Inertial Measurement Unit (IMU) located at the platform's reference point (generally located close to the platform's centre of gravity). It measures all degrees of freedom, generally 3 linear and 3 rotational motions. Usually such an IMU is based on well-established ring laser gyro technology (RLG) and provides excellent long-term stability. The situation is depicted in the upper figure of Fig. 1: When a horizon-stabilized remote sensing device 000 is installed on the platform its attitude is estimated by

- linear and rotational motion measurements of the IMU in the reference point 001 and

- a transformation based on a model of the structure 002 (dotted line)

The horizon stabilisation itself may use mechanical or electronic/signal-processing means.

The simplest model assumes a stiff platform structure (fixed lever model) resulting in simple coordinate transformations to get the attitude of the remote sensing device on the structure. More complex models may consider additional effects like the dynamic response of a flexible platform structure, thermal effects, etc.

For high end applications the knowledge of the platform may be insufficient to model the platform properly. In this case a second (complete) IMU 003 has to be installed in the remote sensing device (point of interest) to measure the attitude independently from the central IMU 001 (lower figure in Fig. 1). Depending on the actual application both IMUs have to be synchronised. In other words the IMU 001 in the reference point has to be synchronised with IMU 003 in the point of interest.

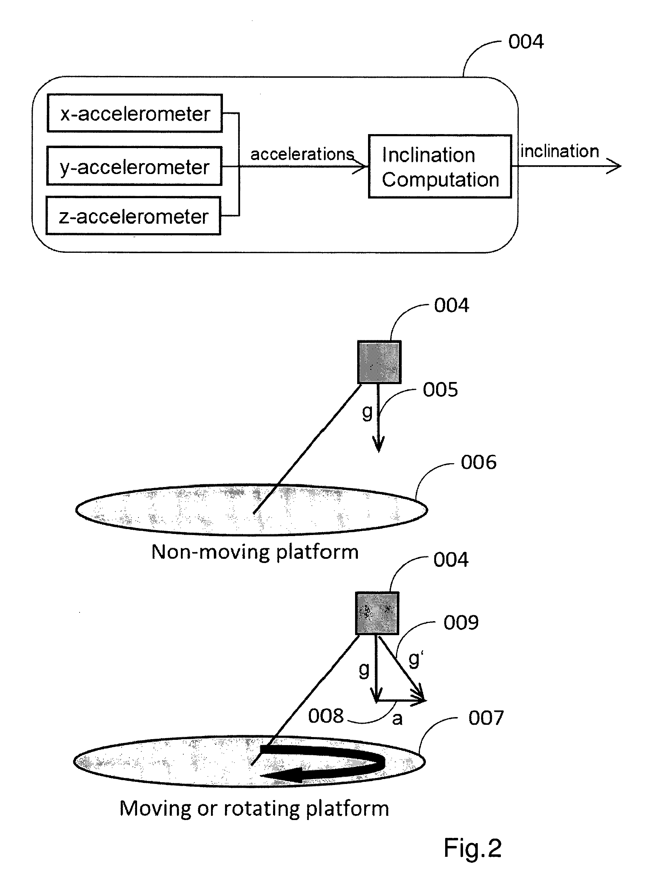

For static applications inclinometers, e. g. realized with Micro-Electro-Mechanical Systems (MEMS) CMOS technology, pose an attractive alternative. The measurement principle for an inclinometer 004 is well-known, basic functionality is shortly summarized in Fig 2. An inclinometer senses the vertical direction or plumb line by measuring the direction of the gravitational force 005 (indicated by vector **g,** in the following vectors are written in bold) by comparing the output of strap down accelerometers in all three dimensions.

$$\mathbf{g} = \mathbf{F}/m \qquad \text{(Eq. 1)}$$

This works when the inclinometer is installed in a static environment on a non-moving platform 006. It will measure its attitude with respect to the plumb line.

However, when installing an inclinometer on a non-stationary (moving or rotating) platform 007 the measurement is corrupted by the motion caused accelerations in the sensors location 008 (indicated by vector **a**'). The inclinometer will measure an erroneous direction 009 (indicated by vector g').

$$\mathbf{g}' = (\mathbf{F} - m \cdot \mathbf{a}') / m \qquad \text{(Eq. 2)}$$

The object of the invention is to provide a system and a method comprising a moving platform with an inertial measurement unit and an inclinometer located at a location spaced from the inertial measurement unit to determine a correction term to compensate the defective measurement of the acceleration of the inclinometer. This object is achieved by the system according to claim 1 and a method according to claim 4. Advantageous achievements of the inventions are subject to further dependant claims.

These needs are met by a system and method according to the present invention for sensing the inclination of a platform with respect to gravity. The word "platform" is intended to include any element, e.g. ships on which an inclinometer is mounted, and is not to be limited to an element, e.g. ships that supports other elements, e.g. radar platforms. The platform defines orthogonal X and Y axes, and a Z axis orthogonal to both the X and Y axes. The platform is rotatable about an axis of rotation extending parallel to the Z axis.

The system includes an inertial measurement unit mounted on the moving platform, located close to the platform's centre of gravity, sensing linear and rotational motions of the moving platform, an inclinometer, mounted on said moving platform at a location spaced from the inertial measurement unit by a distance r sensing the motion-caused gravitational acceleration g' using a 3D accelerometer, an acceleration estimation unit for determining the motion-caused acceleration a' at said point where said inclinometer is mounted by computing said measured linear motions and said measured rotational motions of the inertial measurement unit with a platform model for an motion-caused acceleration depending distance r' between said inertial measurement unit and said inclinometer, an acceleration correction unit determining a motion-compensated gravitational acceleration g by removing the motion-caused acceleration a' from the motion-caused gravitational acceleration g', an attitude computation unit for computing the residual error and determining the sum of said residual error and said the motion-compensated acceleration force g and transforming said sum to attitude values using trigonometric relations.

Another aspect of the invention is a method for sensing the inclination of a moving platform with respect to gravity with an inertial measurement unit mounted on the moving platform located close to the platform's centre of gravity and an inclinometer, mounted on said moving platform at a location spaced from the inertial measurement unit comprising the steps of:

a) sensing linear (011) and rotational motions (012) of the moving platform (007),
b) sensing a motion-caused gravitational acceleration g' by using a 3D accelerometer,
c) determining the force F' applied on the inclinometer (004) by the structure of the platform (007) in case of moving the platform (007)
d) determining the lever r' between the inertial measurement unit (001) and the inclinometer (004) which is deformed by the force F'
e) determining a correction term a' for the motion-caused gravitational acceleration g'
f) applying steps c) to d) recursively, especially n times in the loop, with n>2 for high precision determination of the correction term a'.

The invention mitigates the detrimental effect on the remote sensing device's pointing accuracy when the platform is subject to attitude changes.

The invention and further embodiments are explained in figures. The figures show in:

Fig. 1    a schematic model of a platform structure for the classical transformation of an inclinometer of a non-moving platform,

Fig. 2    a schematic model of a platform structure for the classical transformation of a inclinometer of a moving or rotating platform with the inclinometer measuring the vertical direction of the gravitational force,

Fig. 3    a schematic model of a platform structure for a transformation of an inclinometer of a moving or rotating platform according to the invention,

Fig. 4    a schematic diagram of the steps according to the method of the invention,

Fig. 5    a specified diagram of the steps performed in the acceleration estimation unit according to the invention.

For a stiff platform the erroneous measurement of the inclinometer may be estimated using the data of the central IMU and the fixed geometrical relation **r** between IMU and sensor position and attitude.

$$\mathbf{a'} = \mathbf{a} + \boldsymbol{\omega} \times (\boldsymbol{\omega} \times \mathbf{r}) + d\boldsymbol{\omega}/dt \times \mathbf{r} + 2\,\boldsymbol{\omega} \times \mathbf{v'} \qquad \text{(Eq. 3)}$$

It consists of the linear acceleration in the IMU's location and the effects of the platform rotation, i. e. the centrifugal (w x (w x r)), Euler (dw/dt x r) and Coriolis component (2 **w** x **v'**).

However, when platform bending needs the geometrical relation between IMU and sensor is no longer fixed and the method is inadequate. In this case the force **F'** that the platform structure applies on the sensor device deforms the lever from **r** to **r'** between IMU and sensor. In the linear case this is computed with the 3D deformation constant **D.**

$$\mathbf{r'} = \mathbf{r} + \mathbf{D} \cdot \mathbf{F'} \qquad \text{(Eq. 4)}$$

As the bending force again depends on the geometry a closed form solution is difficult. At this point the invention approximates the bending forces using a stiff structure and a point mass model of the sensor.

In an embodiment the acceleration estimation unit comprises a first circuit for determining the force F' applied on the inclinometer by the structure of the platform in case of moving the platform, a second circuit for determining the lever r' between the inertial measurement unit and the inclinometer which is deformed by the force F' and a third circuit for determining a correction term a' for the motion-caused gravitational acceleration g'.

$$\mathbf{F'} = m \cdot (\mathbf{a} + \boldsymbol{\omega} \times (\boldsymbol{\omega} \times \mathbf{r}) + d\boldsymbol{\omega}/dt \times \mathbf{r} + 2\,\boldsymbol{\omega} \times \mathbf{v'}) \qquad \text{(Eq. 5)}$$

The linear deformation results in

$$\mathbf{r'} = \mathbf{r} + m \cdot \mathbf{D} \cdot (\mathbf{a} + \boldsymbol{\omega} \times (\boldsymbol{\omega} \times \mathbf{r}) + d\boldsymbol{\omega}/dt \times \mathbf{r} + 2\,\boldsymbol{\omega} \times \mathbf{v'}) \qquad \text{(Eq. 6)}$$

which allows to estimate the correction term similar to Equation 3.

$$\mathbf{a'} = \mathbf{a} + \boldsymbol{\omega} \times (\boldsymbol{\omega} \times \mathbf{r'}) + d\boldsymbol{\omega}/dt \times \mathbf{r'} + 2\,\boldsymbol{\omega} \times \mathbf{v'} \qquad \text{(Eq. 7)}$$

According to the invention, the set of Equations 5 to 7 may recursively be applied when the results of Equation 6 and 7 are inserted in Equation 5, i. e. **a** is set to **a'** and **r** is set to r'. This also allows to use a non-linear version instead of Equation 4 with modified Equation 6 accordingly.

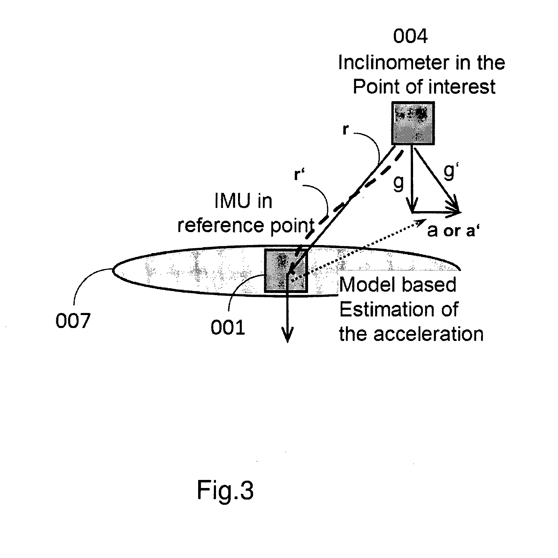

This method is indicated as 'model based estimation of the acceleration' in Fig. 3.

Both the classical transformation of the attitude in Fig. 1 and the new motion-compensation of the inclinometer in Fig. 3 use a model of the platform structure but the effect of errors in the model is different. The invention is much more robust against static model errors like a twisted lever due to temperature effects. The classical transformation permanently translates the twisting to an attitude error. The new inclinometer correction is only sensitive against this twist when the platform accelerates/rotates and the model error corrupts the estimation of the motion induced accelerations in the point of interest. If there is no acceleration nothing needs to be compensated and the error in the model does not care.

On the other hand the invention is more sensitive to any unknown accelerations in the point of interest like for example due to vibrations.

The invention cannot improve the remote sensing device's azimuth (or north) orientation. When the estimation by IMU data and platform model is insufficient the motion compensated inclinometer may be supplemented by an additional local sensor sensitive for the azimuth rotation.

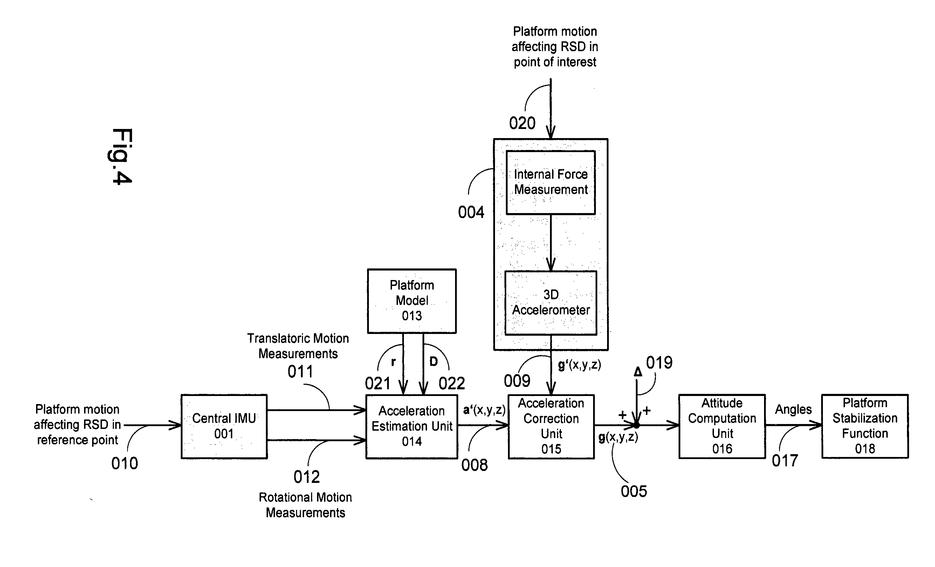

The detailed method is described as follows using Fig. 4:

Assuming a RSD 000 mounted on a non-stationary platform, the platform motion is affecting the central IMU 001 in the reference point. This physical change of conditions is defined as signal information 010, leading to digital output data for translatoric motions 011 as well as rotational motions 012. The translatoric motions 011 are usually defined by position, velocity and acceleration values (linear) over time. The rotational motions 012 are usually defined by three angular data (roll/pitch/yaw) and corresponding derivatives (roll/pitch/yaw rate, roll/pitch/ yaw acceleration) over time.

Next, the measurement data 011 and 012 is fed together with information regarding the platform model 013 to the acceleration estimation unit 014. The platform model 013 contains the three-dimensional geometric relations **r** 021 as well as the three-dimensional deformation vector **D** 022.

The acceleration estimation unit 014 maps the translatoric motion measurements 011 and the rotational motion measurements 012 via a platform model 013 into a corresponding acceleration vector **a'** 008.

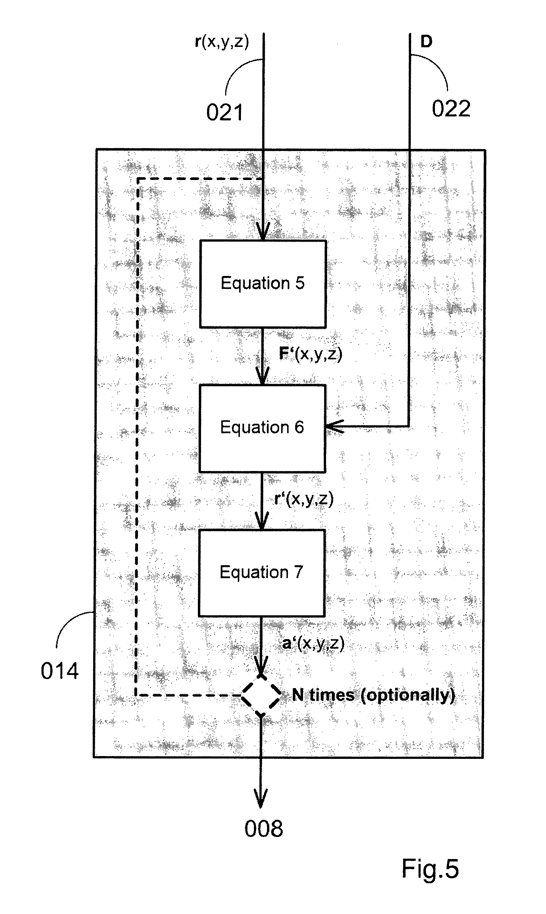

According to Figs. 4 and 5 this involves subsequent application of Equations 5 to 7 inside the acceleration estimation unit 014.

1. First, the translatoric motion measurements 011 and the rotational motion measurements 012 as well as the three-dimensional geometric relations **r** 021 are used to estimate the force **F'** that the structure applies on the remote sensing device according to Equation 5,

2. Second, the force **F'** and and the three-dimensional deformation vector **D** 022 are used to estimate the platform deformation r' according to Equation 6.

3. Third, the motion-caused accelerations **a'** 008 at the accelerometer's location in the remote sensor device (=point of interest) are computed with Equation 7.

For high precision application applications steps 1 to 3 may be applied n times in the loop.

If motion measurements 011 and 012 do not contain all needed inputs, supplementary integration and differentiation operations are part of the acceleration estimation unit 014.

Sensor motion 020 also affects the 3D accelerometer/inclinometer located in the point of interest (where the RSD is located). Using internal force measurements (usually with silicon-based comb structures), 004 outputs accelerometer data vector **g'** 009 in three dimensions. Assuming platform motions 010 and sensor motions 020, **g'** will be contaminated by the motion-induced accelerations, which are estimated by acceleration vector **a'** 008. Inside the acceleration correction unit 015, **a'** 008 is removed from **g'** 009, resulting in motion-compensated acceleration vector **g** 005. The removal is achieved by vector subtraction of the result of Equation 7.

To account for all error sources

- IMU measurement error in 011 and 012,
- Accelerometer measurement error in 009,
- Platform model error in 013,
- Transformation function error in 014,

the residual error $\Delta$ 019 is added to **g** 005. Thus, the final accuracy depends on the quality of a priori information (platform model, transformation) as well as the available sensor technology (IMU and accelerometer/inclinometer).

Inside the attitude computation unit 016 the errorenous vector **g+**$\Delta$ is transformed to attitude values using trigonometric relations as known to the skilled person in the field, i.e. x being the x-component of g(x,y,z), et cetera:

$$x_{att}=atan(x/sqrt(y^2+z^2))/pi*180 \quad in \;°, \qquad (Eq. 8)$$

$$y_{att}=atan(y/sqrt(x^2+z^2))/pi*180 \quad in \;°. \qquad (Eq. 9)$$

Depending on basic orientation of the sensor, Equation 8 or 9 can be pitch or roll, respectively.

The resulting angles 017 are entering the platform stabilization function 018. The function 018 can exploit either mechanical or electronic means depending on the system architecture of the RSD, however, modern systems will preferably use electronic means with appropiate signal processing, therefore in Fig. 4 the function 018 is denoted as a logical component.

**Claims**

**1.**  A system for sensing the inclination of a moving platform (007) with respect to gravity, comprising:

- an inertial measurement unit (001), mounted on the moving platform (007), located close to the platform's centre of gravity, sensing linear (011) and rotational motions (012) of the moving platform (007),
- an inclinometer (004), mounted on said moving platform (007) at a location spaced from the inertial measurement unit (001) by a distance r sensing the motion-caused gravitational acceleration g' using a 3D accelerometer,
- an acceleration estimation unit (014) for determining the motion-caused acceleration a' at said point where said inclinometer (004) is mounted by computing said measured linear motions (011) and said measured rotational motions (012) of the inertial measurement unit (001) with a platform model (013) for an motion-caused acceleration depending distance r' between said inertial measurement unit (001) and said inclinometer (007)
- an acceleration correction unit (015) determining a motion-compensated gravitational acceleration g by removing the motion-caused acceleration a' from the motion-caused gravitational force g',
- an attitude computation unit (016) for computing the residual error (019) and determining the sum of said residual error (019) and said the motion-compensated gravitational acceleration g and transforming said sum to attitude values using trigonometric relations.

2. A system of claim 1 further comprising a rate gyro mounted on the platform for north alignment.

3. A system of claim 1 or 2 in which the acceleration estimation unit (14) comprises a first circuit for determining the force F' applied on the inclinometer (004) by the structure of the platform (007) in case of moving the platform (007), a second circuit for determining the lever r' between the inertial measurement unit (001) and the inclinometer (004) which is deformed by the force F' and a third circuit for determining a correction term a' for the motion-caused gravitational acceleration g'.

4. A method for sensing the inclination of a moving platform with respect to gravity with an inertial measurement unit mounted on the moving platform located close to the platform's centre of gravity and an inclinometer, mounted on said moving platform at a location spaced from the inertial measurement unit comprising the steps of:

> a) sensing linear (011) and rotational motions (012) of the moving platform (007),
> b) sensing a motion-caused gravitational acceleration g' by using a 3D accelerometer,
> c) determining the force F' applied on the inclinometer (004) by the structure of the platform (007) in case of moving the platform (007)
> d) determining the lever r' between the inertial measurement unit (001) and the inclinometer (004) which is deformed by the force F'
> e) determining a correction term a' for the motion-caused gravitational acceleration g'
> f) applying steps c) to d) recursively, especially n times in the loop, with n>2 for high precision determination of the correction term a'.

5. A method of claim 4 comprising a step of determining a motion-compensated gravitational acceleration g by removing the motion-caused acceleration a' from the motion-caused gravitational acceleration g'.

6. A method of claim 5 comprising a step of computing the residual error (019) and a further step of determining the sum of said residual error (019) and said the motion-compensated gravitational acceleration g and transforming said sum to attitude values using trigonometric relations.

Point of interest

000

IMU in
reference point

002

001

Model based
Transformation
of the attitude

IMU in Point of interest

003

IMU in
reference point

001

Fig.1

004

| x-accelerometer |
| y-accelerometer | accelerations → | Inclination Computation | inclination →
| z-accelerometer |

004

g 005

006

Non-moving platform

004

009

g g'

008 a 007

Moving or rotating platform

Fig.2

Fig.3

# Fig.4

r(x,y,z)     D

021     022

Equation 5

F'(x,y,z)

Equation 6

r'(x,y,z)

Equation 7

a'(x,y,z)

014

N times (optionally)

008

Fig.5

Europäisches
Patentamt

European
Patent Office

Office européen
des brevets

## EUROPEAN SEARCH REPORT

Application Number

EP 14 00 1332

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 608 641 A (SNELL REGINALD J [GB]) 26 August 1986 (1986-08-26) * column 1, line 29 - line 31; figures 1, 2 * * column 1, line 55 - line 60 * * column 7, line 20 - line 35 * * column 7, line 65 - column 8, line 2 * ----- | 1-6 | INV. G01C21/16 G08G1/00 G01C9/00 |
| X | US 4 070 674 A (BUELL HEINZ ET AL) 24 January 1978 (1978-01-24) * column 4, line 32 - line 36; figure 2 * * column 4, line 45 - line 68 * ----- | 1-6 | |
| A | US 2009/312974 A1 (DOUGLAS FRANK BEARD [US]) 17 December 2009 (2009-12-17) * the whole document * ----- | 1-6 | |

TECHNICAL FIELDS
SEARCHED      (IPC)

G01C
G08G

The present search report has been drawn up for all claims

| Place of search | Date of completion of the search | Examiner |
|---|---|---|
| The Hague | 10 September 2014 | Hunt, Joke |

EPO FORM 1503 03.82 (P04C01)

## ANNEX TO THE EUROPEAN SEARCH REPORT
## ON EUROPEAN PATENT APPLICATION NO.

EP 14 00 1332

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2014

| Patent document cited in search report | | Publication date | Patent family member(s) | | Publication date |
|---|---|---|---|---|---|
| US 4608641 | A | 26-08-1986 | CA | 1192665 A1 | 27-08-1985 |
| | | | DE | 3228978 A1 | 17-03-1983 |
| | | | FR | 2511146 A1 | 11-02-1983 |
| | | | GB | 2103792 A | 23-02-1983 |
| | | | IT | 1149340 B | 03-12-1986 |
| | | | SE | 464431 B | 22-04-1991 |
| | | | US | 4608641 A | 26-08-1986 |
| US 4070674 | A | 24-01-1978 | NONE | | |
| US 2009312974 | A1 | 17-12-2009 | CN | 102066875 A | 18-05-2011 |
| | | | DE | 112009001466 T5 | 12-05-2011 |
| | | | US | 2009312974 A1 | 17-12-2009 |
| | | | WO | 2009155269 A2 | 23-12-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7650252 B2